# EUROPÄISCHE PATENTSCHRIFT

(11) **EP 3 302 894 B1**
(45) Veröffentlichungstag und Bekanntmachung des Hinweises auf die Patenterteilung: **26.04.2023**
(21) Anmeldenummer: 16738666.3
(22) Anmeldetag: 03.06.2016
(51) Int. Cl.: B25J 9/00, B25J 5/00, B25J 11/00, B25J 13/00, B25J 13/08, A61G 7/08

(54) **ROBOTERGESTÜTZTES TRANSPORTIEREN EINES VERFAHRBAREN GEGENSTANDS**
ROBOT-ASSISTED TRANSPORT OF A MOBILE OBJECT
TRANSPORT ROBOTISÉ D'UN OBJET MOBILE

(30) Priorität: 05.06.2015 DE 102015007177; 01.07.2015 DE 102015110557
(43) Veröffentlichungstag der Anmeldung: 11.04.2018
(73) Patentinhaber: Buck, Thomas, 40822 Mettmann (DE)
(72) Erfinder: Buck, Thomas, 40822 Mettmann (DE)
(74) Vertreter: Von Rohr Patentanwälte Partnerschaft mbB
(86) Internationale Anmeldenummer: PCT/EP2016/000914
(87) Internationale Veröffentlichungsnummer: WO 2016/192857

(56) Entgegenhaltungen:
- DE-A1-102008 010 463
- JP-A- 2000 042 958
- JP-A- 2003 270 384
- JP-A- 2007 111 826
- JP-A- 2011 216 007
- JP-A- 2012 188 914
- US-A1- 2010 019 715
- US-A1- 2013 269 710
- US-A1- 2015 142 249

## Beschreibung

Die vorliegende Erfindung betrifft ein Robotersystem zum Transportieren eines verfahrbaren Gegenstands, insbesondere eines Krankenhausbettes, gemäß Anspruch und ein Verfahren zum Transportieren eines verfahrbaren Gegenstands, insbesondere eines Krankenhausbettes, gemäß Anspruch 8.

Verwendungszweck der Gegenstände der vorliegenden Erfindung ist das Transportieren eines verfahrbaren Gegenstands. Der Ausdruck "verfahrbarer Gegenstand", wie er im Rahmen der vorliegenden Erfindung verwendet wird, bezeichnet einen Gegenstand, der mindestens ein Fahrwerk aufweist, mit dem der Gegenstand unter Krafteinwirkung rollend und/oder gleitend fortbewegt werden kann. Das Fahrwerk des Gegenstands hat also beim Transportieren grundsätzlich Kontakt zu einem Untergrund, auf dem der Gegenstand transportiert wird (z. B. einem Fußboden).

Verfahrbare Gegenstände der in der Rede stehenden Art sind z. B. verfahrbare Sitz- und/oder Liegemöbel. Sitz- bzw. Liegemöbel dienen der Aufnahme einer Person zum Sitzen bzw. Liegen. Beispiele dafür sind Rollstühle und Pflegebetten. Verfahrbare Gegenstände im Sinne der vorliegenden Erfindung sind auch verfahrbare Maschinen, Anhänger, Lastenträger usw.

Zum Transportieren solcher verfahrbaren Gegenstände werden vor allem im industriellen Umfeld zunehmend Roboter eingesetzt. Typischerweise versteht man unter einem Roboter eine programmierbare Vorrichtung, die über mindestens drei frei bewegliche Achsen verfügt.

Einen solchen Roboter zeigt die DE 10 2011 085 019 A1. Der bekannte Roboter hat einen Fahrzeugkörper, ein Fahrwerk mit wenigstens einem angetriebenen Rad, eine Koppeleinrichtung zum Koppeln eines Anhängers an den Roboter und mindestens einen berührungslos detektierenden Abstandssensor. Der Abstandssensor dient dazu, Hindernisse und/oder Personen im Umfeld des Roboters und/oder des Anhängers wahrzunehmen. Der verfahrbare Gegenstand ist hier der Anhänger, der eine Last tragen kann und an einem vorderen Endbereich des Anhängers an den

Roboter gekoppelt bzw. von dem Roboter abgekoppelt werden kann.

Das Dokument JP 2012 188914 A offenbart eine Vielzahl von mobilen Robotern, die zusammenarbeiten, um ein Fahrzeug zu bewegen. US 2013/269710 A1 offenbart ein verbundenes Paar mobiler Roboter, die zusammenarbeiten, um eine Krankenhaustrage zu bewegen.

In einer Umgebung, die wenig Raum zum Manövrieren des verfahrbaren Gegenstands bietet, in der bewegliche Hindernisse wie Personen berücksichtigt werden müssen (z. B. um eine Kollision zu vermeiden) und/oder in der Etagen (z. B. mittels eines Aufzugs) überwunden werden müssen (im Folgenden als komplexe Umgebung bezeichnet), lassen sich häufig notwendige Manöver bzw. Fahrbewegungen mit dem bekannten Roboter - insbesondere bei einem längeren bzw. größeren verfahrbaren Gegenstand - nicht bzw. nicht effektiv bzw. nicht effizient durchführen. Eine solche Umgebung stellt z. B. ein Krankenhaus dar. Dort gibt es im Allgemeinen enge Flure mit zahlreichen Abbiegungen, kleine Räume mit schmalem Eingang, teils bewegliche teils unbewegliche Hindernisse sowie Ziele, die nur mittels eines Aufzugs erreicht werden können.

In einem typischen Krankenhaus gibt es eine Vielzahl an Krankenhausbetten. Der Begriff "Krankenhausbett", wie er im Rahmen der vorliegenden Erfindung verwendet wird, bezeichnet ein klinischen Anforderungen angepasstes Liegemöbel. Ein solches Krankenhausbett hat meist ein Fahrwerk mit vier nicht angetriebenen Rädern, wobei zwei Räder in einem vorderen Endbereich und die anderen beiden Räder in einem hinteren Endbereich des Krankenhausbettes angebracht sind. Typischerweise können die am selben Endbereich angebrachten Räder gemeinsam so festgestellt werden, dass sie nur in eine Richtung rollbar sind und das Krankenhausbett mittels der beiden anderen, nicht festgestellten sondern in alle Richtungen rollbaren Räder beim Transportieren gesteuert werden kann. Krankenhausbetten der in der Rede stehenden Art haben einen Rahmen und ein Gitter oder eine Platte, das bzw. die eine Matratze trägt. Ein solches Krankenhausbett ist manuell oder elektrisch verstellbar, zumeist separat in drei Abschnitten einer Liegefläche.

Krankenhausbetten werden typischerweise durch Krankenhauspersonal manuell von einem Abholort (z. B. einem Patientenzimmer) zu einem Zielort (z. B. einem Operationssaal) transportiert. Aufgrund einer typischerweise herrschenden Unterausstattung an Krankenhauspersonal sowie krankheits- und/oder urlaubsbedingter Abwesenheit von Krankenhauspersonal kommt es in Krankenhäusern immer wieder zu ökonomisch relevanten Wartezeiten, Verzögerungen, Verschiebungen bzw. Ausfällen von Operationsterminen und/oder mangelnder Zufriedenheit von Patienten.

Gerade hier ist also ein robotergestützter Transport von Krankenhausbetten wünschenswert und zugleich herausfordernd. Das gleiche gilt für den Transport von anderen verfahrbaren Gegenständen in Krankenhäusern, wie z. B. Operationstische und medizinische Apparate.

Aufgabe der vorliegenden Erfindung ist es daher, Systeme, Vorrichtungen und/oder Arbeitsverfahren anzugeben, die ein effektives, präzises, zuverlässiges, pünktliches, schnelles, kostengünstiges und/oder effizientes robotergestütztes Transportieren eines verfahrbaren Gegenstands auch in komplexen Umgebungen ermöglichen.

Gemäß einem ersten Erfindungsaspekt wird die zuvor geschilderte Aufgabenstellung durch ein Robotersystem nach Anspruch 1 gelöst. Bevorzugte Ausgestaltungen dieses Erfindungsaspekts sind Gegenstand der diesbezüglichen Unteransprüche.

Es versteht sich von selbst, dass Ausgestaltungen, Ausführungsformen, Vorteile und dergleichen, welche nachfolgend zu Zwecken der Vermeidung von Wiederholungen nur zu einem Erfindungsaspekt angeführt sind, in Bezug auf die übrigen Erfindungsaspekte entsprechend gelten.

Dies vorausgeschickt, wird im Folgenden der erste Erfindungsaspekt näher beschrieben.

Der Grundgedanke des ersten Erfindungsaspekts besteht darin, dass das Robotersystem zwei Roboter umfasst und beide Roboter jeweils an den verfahrbaren Gegenstand, insbesondere an eine Koppeleinrichtung des verfahrbaren Gegenstands, derart koppelbar sind, dass eine Kraft von mindestens einem der Roboter auf den verfahrbaren Gegenstand übertragbar ist, so dass die Roboter gemeinsam den verfahrbaren Gegenstand transportieren können.

Zum Transportieren des verfahrbaren Gegenstands sind beide Roboter gleichzeitig aber an unterschiedlichen Stellen des verfahrbaren Gegenstands an dem verfahrbaren Gegenstand gekoppelt. Mit Hilfe der beiden Roboter lässt sich der verfahrbare Gegenstand auch in komplexen Umgebungen effektiv, präzise, zuverlässig, pünktlich, schnell, kostengünstig und effizient manövrieren bzw. transportieren. Insbesondere ermöglicht das erfindungsgemäße Robotersystem ein präziseres und schnelleres Manövrieren und eine geringere Manövrierfläche (Fläche, die der verfahrbare Gegenstand beim Manövrieren überstreicht) als beim Transportieren durch eine Person oder einen Roboter oder mehrere Personen.

Vorzugsweise weisen beiden Roboter jeweils eine Kommunikationseinrichtung auf, die eine drahtlose Kommunikation mit der Kommunikationseinrichtung des anderen Roboters und/oder eines Aufzugs und/oder eines zentralen Steuersystems ermöglicht.

Mit Hilfe der Kommunikationseinrichtung kann ein Roboter Informationen wie z. B. Sensordaten an die Kommunikationseinrichtung des anderen Roboters drahtlos übertragen. Der andere Roboter kann dann diese Informationen auswerten und gegebenenfalls Maßnahmen unter Berücksichtigung dieser Informationen ergreifen.

Mit Hilfe ihrer jeweiligen Kommunikationseinrichtung können beide Roboter auch drahtlos mit einem Aufzug und/oder einem zentralen Steuersystem kommunizieren. So können beide Roboter z. B. einen Aufzug veranlassen, in einer bestimmten Etage zu halten. Die Roboter können aber auch mit dem zentralen Steuersystem kommunizieren, so dass das zentrale Steuersystem einen Aufzug dazu veranlasst, auf einer bestimmten Etage zu halten.

Vorzugsweise weisen beide Roboter jeweils eine Steuereinrichtung auf, insbesondere zur Steuerung eines Fahrwerks des jeweiligen Roboters. Dabei sind beide Roboter so ausgebildet, dass Steuerbefehle der Steuereinrichtung des einen Roboters mit der Steuereinrichtung des anderen Roboters abstimmbar sind, insbesondere dass Steuerinformationen des einen Roboters mittels der Kommunikationseinrichtung des einen Roboters an die Kommunikationseinrichtung des anderen Roboters drahtlos übertragbar sind.

Steuerbefehle im Sinne der vorliegenden Erfindung sind Befehle bzw. Kommandos einer Steuereinrichtung eines Roboters, die an eine oder mehrere seiner Komponenten gerichtet sind, z. B. an ein Fahrwerk des Roboters.

Bei dieser bevorzugten Ausführungsform können sich die beiden Roboter also miteinander absprechen bzw. ihre Prozesse koordinieren. Insbesondere können die beiden Roboter ihre Fahrbewegungen koordinieren, also z. B. hinsichtlich Richtung, Geschwindigkeit, Beschleunigung und/oder Zeit so abstimmen, dass eine gemeinsame Aktion (wie z. B. das gemeinsame Transportieren des verfahrbaren Gegenstands oder das gemeinsame Fahren zu einem Abholort) effektiv, präzise, zuverlässig, pünktlich, schnell, kostengünstig und effizient durchgeführt wird. Entsprechendes gilt für die von den beiden Robotern ausgeübte und somit insgesamt resultierende Kraft auf den verfahrbaren Gegenstand, z. B. hinsichtlich Richtung, Zeit und Intensität der resultierenden Kraft. So können die beiden Roboter z. B. Brems- und/oder Anfahrtsmanöver miteinander abstimmen und auch (zeitlich) synchronisieren.

Auch den Vorgang des Koppelns können die beiden Roboter miteinander abstimmen. So können die beiden Roboter festlegen, welcher von ihnen wann und wo am verfahrbaren Gegenstand, insbesondere an welcher Koppeleinrichtung des verfahrbaren Gegenstands, koppelt.

Die beiden Roboter können auch Interaktionen mit Personen miteinander abstimmen. So können die beiden Roboter z. B. koordinieren, welcher Roboter wann und wo und unter welchen Bedingungen einen Hinweis, eine Warnmeldung und/oder eine Aufforderung wiedergibt.

Beim Abstimmen der Steuerbefehle können die Steuerbefehle der beiden Roboter gleichrangig behandelt werden. Bei nicht gemeinsam umsetzbaren Steuerbefehlen kann eine von beiden Robotern umzusetzende Entscheidung z. B. anhand der Eingangszeit der Steuerbefehle oder zufällig getroffen werden. Es ist aber auch möglich, im Sinne eines Master/Slave-Prinzips einem Roboter die Entscheidungshoheit zuzuordnen. Der Master-Roboter kann dann dem Slave-Roboter Steuerbefehle diktieren, die vom Slave-Roboter durchzuführen sind. Dabei kann die Rolle als Master bzw. Slave zwischen den Robotern auch wechseln. So kann z. B. während des Transportierens des verfahrbaren Gegenstands immer derjenige Roboter die Masterrolle innehaben, der, wenn der eine Roboter an einem vorderen Endbereich und der andere Roboter an einem hinteren Endbereich an den verfahrbaren Gegenstand gekoppelt sind, an dem in Fahrtrichtung vorderen Endbereich des verfahrbaren Gegenstands gekoppelt ist, jeweils die Masterrolle übernehmen.

Der Roboter mit der Masterrolle kann also dem Slave-Roboter bestimmte Steuerbefehle vorgeben, z. B. während einer Kurvenfahrt wann und wie eine Kurve gefahren werden soll. Bei einem Fahrtrichtungswechsel kann dann auch die Rolle des Masters bzw. Slaves zwischen den beiden Robotern wechseln.

Das Master/Slave-Prinzip kann aber auch durchbrochen werden. Erfasst beispielsweise der Slave-Roboter ein Hindernis, das der Master nicht erfasst, kann der Slave-Roboter ein Abbremsen beider Roboter mittels Steuerbefehlen erzwingen.

Vorzugsweise weisen beide Roboter jeweils eine Detektionseinrichtung zur Detektion und/oder Lokalisierung einer Koppeleinrichtung des verfahrbaren Gegenstands auf. Aufgabe der Detektionseinrichtung ist es insbesondere zu lokalisieren, wo sich die Koppeleinrichtung am verfahrbaren Gegenstand befindet. Die Position der Koppeleinrichtung kann von verfahrbarem Gegenstand zu verfahrbarem Gegenstand unterschiedlich sein, z. B. hinsichtlich der Höhe, auf der die Koppeleinrichtung am verfahrbaren Gegenstand angebracht ist. Mittels der Detektionseinrichtung lässt sich unter anderem die Höhe ermitteln, auf der die Koppeleinrichtung am verfahrbaren Gegenstand angebracht ist.

Eine weitere bevorzugte Aufgabe der Detektionseinrichtung ist es zu ermitteln, ob sich die Koppeleinrichtung des verfahrbaren Gegenstands an einem vorderen Endbereich oder an einem hinteren Endbereich des verfahrbaren Gegenstands befindet.

Die Detektionseinrichtung kann z. B. einen Barcode-Leser, insbesondere einen Barcode-Scanner, umfassen. Die Detektionseinheit kann auch eine Leseeinheit aufweisen, die zum Auslesen einer Kennung eines Transponders ausgebildet ist. Hierzu eignet sich insbesondere eine mit einem RFID-Transponder korrespondierende Leseeinheit, die mittels magnetischer Wechselfelder und/oder hochfrequenter Radiowellen eine Kopplung mit dem RFID-Transponder herstellen kann. Bevorzugt ist die Leseeinheit zur Datenverarbeitung mittels eines Mikroprogramms und einer Middleware mit einer Schnittstelle zu weiteren elektronischen Schaltungen ausgebildet. Mit Hilfe eines Systems aus der Leseeinheit der Detektionseinrichtung und einem RFID-Transponder lassen sich Gegenstände automatisch und berührungslos identifizieren und lokalisieren.

Vorzugsweise weisen beide Roboter des Robotersystems jeweils einen Abstandssensor auf. Mit Hilfe des Abstandssensors lässt sich ein Abstand zwischen einem Bezugspunkt des Roboters und einem verfahrbaren Gegenstand und/oder einer Person bestimmen. Mittels des Abstandssensors lässt sich z. B. der Abstand zwischen einem Bezugspunkt des Roboters und einer Koppeleinrichtung des verfahrbaren Gegenstands erfassen. Diese Information kann beim Koppeln des Roboters mit dem verfahrbaren Gegenstand, insbesondere mit der Koppeleinrichtung des verfahrbaren Gegenstands, verwendet werden.

Vorzugsweise sind beide Roboter höhenverstellbar ausgebildet, wobei die Höhenverstellung bevorzugt mittels eines Drucksensors steuer- oder regelbar ist. Die Höhenverstellbarkeit des Roboters ist unter anderem beim Koppeln mit dem verfahrbaren Gegenstand vorteilhaft. So kann der Roboter mit unterschiedlich hohen verfahrbaren Gegenständen, insbesondere mit auf unterschiedlichen Höhen angebrachten Koppeleinrichtungen verschiedener verfahrbarer Gegenstände gekoppelt werden.

Vorzugsweise weisen beide Roboter jeweils mindestens einen Energiespeicher auf, der mittels einer Ladestation wiederaufladbar ist. Beide Roboter sind dann so ausgebildet, dass sie autonom zum Aufladen zu einer Ladestation bewegbar sind. Ein solcher Energiespeicher kann z. B. ein Akkumulator sein.

Vorzugweise weist mindestens ein Roboter einen Lautsprecher, ein Mikrofon, ein Display, eine Eingabeeinrichtung und/oder einen Touchscreen auf. Es können auch zwei Lautsprecher auf je einer Seite des Roboters vorgesehen sein. Bevorzugt ist dieser Roboter so eingerichtet, dass eine Zielangabe von einer Person vorgenommen werden kann und/oder eine Audio- und/oder Bildwiedergabe synchron mit dem anderen Roboter erfolgt. So können z. B. Daten mittels Sprache und/oder einer Tastatur eingegeben und/oder Audio- sowie Bilddaten (inklusive Videos) wiedergegeben werden. Insbesondere kann so ein Transport von einer Person programmiert, verändert und/oder abgebrochen werden. Außerdem kann der Roboter Hinweise, Warnungen und/oder Aufforderungen wiedergeben. Vorzugsweise werden Bildwiedergaben der Roboter gleichzeitig in Sprache wiedergegeben.

Vorzugweise weisen beide Roboter jeweils ein Fahrwerk mit mindestens einem angetriebenen Rad auf. Das angetriebene Rad wird beispielsweise von einem Motor angetrieben. Bevorzugt ist das angetriebene Rad mittels einer Stelleinrichtung auf einen Untergrund, z. B. einen Fußboden eines Gebäudes, drückbar. Die Stelleinrichtung kann z. B. eine Feder, eine Hydraulik und/oder einen Elektromotor umfassen. Auf diese Weise können Unebenheiten des Untergrunds ausgeglichen werden. Außerdem lässt sich mit dieser vorteilhaften Ausgestaltung eine Traktionskontrolle realisieren.

Vorzugsweise weist das Fahrwerk des Roboters mindestens ein weiteres, auf einen Untergrund hinunter und von dem Untergrund weg bewegbares Rad auf. Dieses Rad dient zur Stützung des Roboters und ist vorzugsweise ein nicht angetriebenes Rad.

Vorzugsweise sind beide Roboter des Robotersystems so eingerichtet, dass sie den verfahrbaren Gegenstand vorwärts, rückwärts und seitwärts verfahren können, ohne den verfahrbaren Gegenstand anzuheben. Vielmehr wird das Fahrwerk des verfahrbaren Gegenstands zum Transport des verfahrbaren Gegenstands genutzt. Im Falle eines Krankenhausbettes werden beim Transportieren des Krankenhausbettes also alle Räder des Krankenhausbettes genutzt und die beiden Roboter schieben, ziehen und/oder drehen das Krankenhausbett bzw. bewegen es seitwärts.

Es hat sich als vorteilhaft erwiesen, wenn beide Roboter an einem vorderen und/oder hinteren Endbereich des verfahrbaren Gegenstands an- und abkoppelbar sind. Zum Transportieren des verfahrbaren Gegenstands koppelt dann einer der beiden Roboter an dem vorderen Endbereich des verfahrbaren Gegenstands (z. B. an einem Kopfende eines Krankenhausbettes) und der andere Roboter an dem hinteren Endbereich des verfahrbaren Gegenstands (z. B. an einem Fußende eines Krankenhausbettes). Auf dieses Weise können die beiden Roboter den verfahrbaren Gegenstand effektiv und effizient manövrieren. Insbesondere bei einem verfahrbaren Gegenstand, dessen Länge größer ist als dessen Breite (wie z. B. bei einem Krankenhausbett), lässt sich auf diese Weise der verfahrbare Gegenstand am besten durch eine beengte Umgebung mit Hindernissen und um Kurven, Ecken bzw. Abbiegungen manövrieren.

Dieser Vorteil wird noch verstärkt, wenn beide Roboter am jeweiligen Endbereich des verfahrbaren Gegenstands mittig ankoppelbar sind.

Vorzugsweise weisen beide Roboter des Robotersystems jeweils eine zu einer Koppeleinrichtung des verfahrbaren Gegenstands passende Koppeleinrichtung auf. Dazu kann die Koppeleinrichtung des jeweiligen Roboters z. B. magnetisch und/oder geometrisch komplementär zur Koppeleinrichtung des verfahrbaren Gegenstands ausgebildet sein. Es hat sich als vorteilhaft erwiesen, wenn im gekoppelten Zustand die Koppeleinrichtung des Roboters mit der Koppeleinrichtung des verfahrbaren Gegenstands starr verbunden ist und/oder der Roboter kippfest mit dem verfahrbaren Gegenstand verbunden ist. Durch eine starre, kippfeste und kraftschlüssige Kopplung der Roboter mit dem verfahrbaren Gegenstand können sie ihn mittels ihres jeweiligen Fahrwerks, insbesondere mittels ihrer jeweiligen angetriebenen Räder, bewegen und lenken.

Vorzugsweise sind beide Roboter, insbesondere deren jeweilige Koppeleinrichtung hinsichtlich ihrer Höhe, ihres Abstands und ihres seitlichen Versatzes relativ zur Koppeleinrichtung des verfahrbaren Gegenstands, so ausrichtbar, dass die Koppeleinrichtung des jeweiligen Roboters mit der Koppeleinrichtung des verfahrbaren Gegenstands koppelbar ist. Hierzu können unter anderem das Fahrwerk des Roboters, der Abstandssensor des Roboters und die Höhenverstellung des Roboters eingesetzt werden.

Vorzugsweise weist die Koppeleinrichtung des jeweiligen Roboters mindestens ein Koppelelement auf, das, vorzugsweise mittels eines Elektromotors, aus einer entkoppelten Position in eine gekoppelte Position und umgekehrt bewegbar ist. Ein geeignetes Koppelelement ist z. B. eine Kralle, die in der gekoppelten Position in eine Aussparung oder hinter einen Vorsprung der Koppeleinrichtung des verfahrbaren Gegenstands greift.

Vorzugsweise weist mindestens ein Roboter des Robotersystems ein Sensorsystem auf, wobei zumindest ein Teil des Sensorsystems derart höhenverstellbar ist, dass dieser Teil über den verfahrbaren Gegenstand hinausragen kann. Dies ist insbesondere dann nützlich, wenn Messsignale des Sensorsystems durch den verfahrbaren Gegenstand blockiert werden würden. So kann das Sensorsystem beispielsweise einen Abstandssensor und/oder eine Kamera umfassen. Ist einer der beiden Roboter an einem hinteren Endbereich des verfahrbaren Gegenstands gekoppelt und ein Erfassen von Abständen oder Bildern von in Fahrtrichtung vor dem verfahrbaren Gegenstand liegenden Objekten und/oder Personen nicht möglich, kann dies mittels Höhenverstellung des Abstandssensors und/oder der Kamera über den verfahrbaren Gegenstand, insbesondere über die höchste Erhebung des verfahrbaren Gegenstands, hinaus ermöglicht werden.

Vorzugsweise ist mindestens ein Roboter so eingerichtet, dass er ermitteln kann, ob der verfahrbare Gegenstand, insbesondere ein Fahrwerk des verfahrbaren Gegenstands, blockiert ist. So ist es z. B. wünschenswert, dass einer der Roboter erkennt, wenn das Fahrwerk des verfahrbaren Gegenstands, insbesondere eines Krankenhausbettes, festgestellt ist. Wird dies vom Roboter ermittelt, kann er einen Hinweis, eine Warnung und/oder eine Aufforderung wiedergeben und/oder senden, z. B. an ein zentrales Steuersystem.

Erfindungsgemäß sind beide Roboter miteinander verbindbar und dann zusammen als eine, vorzugsweise kompakte Einheit bewegbar. Auf diese Weise können sich beide Roboter zusammen als eine Einheit (z. B. zu einem Abholort) bewegen. Die Einheit ist (z. B. am Abholort zum Koppeln mit dem verfahrbaren Gegenstand) wieder in beide Roboter teilbar, so dass beide Roboter in jeweils unterschiedliche Richtungen bewegbar sind. Vorzugsweise erfolgen Teilung und Verbindung zu einer Einheit automatisch, also nicht manuell.

Vorzugsweise weist mindestens ein Roboter eine entgratete Außenwand auf. Mit dieser Ausgestaltung lassen sich Verletzungen bei Kollisionen des Roboters mit Personen vermeiden.

Die Roboter sind vorzugsweise so kompakt ausgestaltet, dass sie wenig Platz vereinnahmen und ein effektives und effizientes Transportieren des verfahrbaren Gegenstands ermöglichen.

Die Roboter sind vorzugsweise so eingerichtet, dass, wenn mittels des Abstandssensors ein Objekt bzw. eine Person detektiert wird, mit der eine Kollision droht, ein dynamisches Bremsen in Abhängigkeit vom erfassten Abstand zum Objekt bzw. zur Person erfolgt.

Das Robotersystem verfügt vorzugsweise über eine dreidimensionale Gebäudeinformation, insbesondere einen 3D-Gebäudeplan eines Gebäudes, in dem sich das Robotersystem befindet. Mit Hilfe des 3D-Gebäudeplans kann das Robotersystem einen Transportweg von einem Abholort zu einem Zielort für den verfahrbaren Gegenstand, einen Weg zu einem Abholort und/oder einen Weg zu einer Ladestation ermitteln bzw. festlegen. Dabei berücksichtigt das Robotersystem bekannte Hindernisse und/oder Aufzüge, Treppenstufen etc.

Das Robotersystem weist vorzugsweise Mittel zur Navigation und/oder Kollisionserkennung und -vermeidung auf.

Das Robotersystem, insbesondere jeder Roboter des Robotersystems, bewegt sich vorzugsweise autonom durch ein Gebäude. Mittels eines Sensorsystems, bevorzugt mit mehreren Sensoren, scannt das Robotersystem seine Umgebung und ermittelt Hindernisse sowie seine eigene Position im Gebäude. Zur Ermittlung der Position des Robotersystems und zur Orientierung des Robotersystems können z. B. Funkbaken eingesetzt werden. Dabei handelt es sich um ortsfeste Funksender mit vorbekannter Position. Entsprechende Funkbaken können im Gebäude, in dem sich das Robotersystem befindet, angeordnet werden.

Erkennt das Robotersystem ein Hindernis, das nicht umfahren werden kann, kann das Robotersystem einen Hinweis bzw. eine Aufforderung wiedergeben und/oder senden.

Das Robotersystem ist vorzugsweise so ausgebildet, dass es einen Türöffner zum Öffnen einer zugehörigen Tür eines Gebäudes, insbesondere einen Krankenhauses, veranlassen kann. Dazu kann das Robotersystem beispielsweise so eingerichtet sein, dass zumindest ein Roboter des Robotersystems mittels seiner Kommunikationseinrichtung Steuerbefehle an eine Kommunikationseinrichtung des Türöffners übermitteln kann, wobei die Steuerbefehle geeignet sind, eine Steuereinheit des Türöffners bzw. der Tür zum Öffnen der Tür zu veranlassen. Alternativ oder zusätzlich kann zumindest ein Roboter eine Betätigungseinrichtung aufweisen, mit der der Roboter den Türöffner zum Öffnen der entsprechenden Tür betätigen kann. Eine solche Betätigungseinrichtung kann z. B. eine ein- und ausfahrbare Teleskopstange oder ein mehrgliedriger Roboterarm sein.

Gemäß einem weiteren Erfindungsaspekt wird die zuvor geschilderte Aufgabenstellung durch ein Krankenhausbett gemäß Anspruch 7 gelöst. Dieses Krankenhausbett hat zwei angekoppelte Roboter wie zuvor beschrieben.

Gemäß einem weiteren Erfindungsaspekt wird die zuvor geschilderte Aufgabenstellung durch ein Verfahren zum Transport eines verfahrbaren Gegenstands, insbesondere eines Krankenhausbettes, mit einem Robotersystem, insbesondere wie oben beschrieben, nach Anspruch 8 gelöst. Bevorzugte Ausgestaltungen dieses Erfindungsaspekts sind Gegenstand der diesbezüglichen Unteransprüche.

Gemäß dem erfindungsgemäßen Verfahren koppeln mindestens zwei Roboter des Robotersystems an den verfahrbaren Gegenstand, insbesondere an eine Koppeleinrichtung des verfahrbaren Gegenstands, derart, dass eine Kraft von mindestens einem der Roboter auf den verfahrbaren Gegenstand übertragbar ist, so dass die Roboter gemeinsam den verfahrbaren Gegenstand transportieren können. Vorzugsweise koppelt einer der Roboter an einem vorderen Endbereich des verfahrbaren Gegenstands und der andere Roboter an einem hinteren Endbereich des verfahrbaren Gegenstands an. Es ist bevorzugt, wenn die Roboter den verfahrbaren Gegenstand durch Schieben und/oder Ziehen und/oder seitwärts Bewegen zu einem Ziel transportieren, ohne den verfahrbaren Gegenstand anzuheben. Vorzugsweise detektiert und/oder lokalisiert einer der Roboter mittels einer Detektionseinrichtung eine Koppeleinrichtung des verfahrbaren Gegenstands, nähert sich der Koppeleinrichtung und richtet zum Koppeln mit einer Koppeleinrichtung des verfahrbaren Gegenstands eine zu der Koppeleinrichtung des verfahrbaren Gegenstands passende Koppeleinrichtung hinsichtlich ihrer Höhe, ihres Abstands und ihres seitlichen Versatzes relativ zu der Koppeleinrichtung des verfahrbaren Gegenstands aus. Bevorzugt bewegt der Roboter ein Koppelelement der Koppeleinrichtung des Roboters, insbesondere mittels eines Elektromotors, aus einer entkoppelten Position in eine gekoppelte Position.

Vorzugsweise kommuniziert einer der Roboter mittels einer Kommunikationseinrichtung drahtlos mit der Kommunikationseinrichtung des anderen Roboters und/oder eines Aufzugs und/oder eines zentralen Steuersystems.

Vorzugsweise stimmt der eine Roboter Steuerbefehle einer Steuereinrichtung des einen Roboters, insbesondere zur Steuerung eines Fahrwerks des einen Roboters, mit der Steuereinrichtung des anderen Roboters ab. Insbesondere übermittelt der eine Roboter Steuerinformation mittels der Kommunikationseinrichtung des einen Roboters an die Kommunikationseinrichtung des anderen Roboters drahtlos.

Erfindungsgemäß sind beide Roboter vor Transportbeginn miteinander verbunden und bewegen sich zusammen als eine Einheit zu einem Abholort. Erst am Abholort teilen sich beide Roboter und bewegen sich separat. Zum Teilen und/oder Abkoppeln vom verfahrbaren Gegenstand bewegen beide Roboter zur Stützung des jeweiligen Roboters jeweils mindestens ein Rad eines Fahrwerks auf einen Untergrund hinunter. Bei diesem Rad handelt es sich insbesondere um ein nicht angetriebenes Rad. Vorzugsweise übermittelt der eine Roboter mittels einer Eingabeeinrichtung eingegebene Information an den anderen Roboter drahtlos.

Vorzugsweise nimmt der eine Roboter eine Audio- und/oder Bildwiedergabe (inklusive Videowiedergabe) synchron mit dem anderen Roboter vor.

Vorzugsweise wird zumindest ein Teil eines Sensorsystems des einen Roboters derart höhenverstellt, dass dieser Teil zur Erfassung von Sensordaten über den verfahrbaren Gegenstand hinausragt.

Vorzugsweise ermittelt der eine Roboter oder ermitteln beide Roboter vor Transportbeginn, ob der verfahrbare Gegenstand, insbesondere ein Fahrwerk des verfahrbaren Gegenstands blockiert ist.

Beim Transportieren des verfahrbaren Gegenstands durch das Robotersystem mittels eines Aufzugs kann es vorkommen, dass der Aufzug nicht genügend Platz dafür bietet, dass beide Roboter während der Aufzugfahrt am verfahrbaren Gegenstand angekoppelt bleiben können. Insbesondere kann es sein, dass ein Aufzug nicht lang genug dafür ist, dass der eine Roboter an einem vorderen Endbereich und der andere Roboter an einem hinteren Endbereich angekoppelt bleiben können.

Erfindungsgemäß ist zur Lösung solcher Situationen vorgesehen, dass während einer Aufzugfahrt zumindest ein Roboter vom verfahrbaren Gegenstand abgekoppelt ist. Dazu kann folgender Ablauf vorgesehen sein. Beim Einfahren in den Aufzug sind beide Roboter an den verfahrbaren Gegenstand angekoppelt und manövrieren den verfahrbaren Gegenstand in den Aufzug. Während oder nach dem Einfahren koppelt sich einer der beiden Roboter, z. B. der in Einfahrtrichtung vordere Roboter, vom verfahrbaren Gegenstand ab und bewegt sich zur Seite. Der andere Roboter fährt dann den verfahrbaren Gegenstand vollständig in den Aufzug ein, sofern dies noch nicht geschehen ist. Anschließend kann der andere Roboter entweder am verfahrbaren Gegenstand angekoppelt bleiben oder sich ebenfalls vom verfahrbaren Gegenstand abkoppeln.

Nun können beide Roboter im Aufzug verbleiben (z. B. seitlich neben dem verfahrbaren Gegenstand) und mit dem verfahrbaren Gegenstand im Aufzug fahren. Auf der Zieletage angekommen, wird der beschriebene Verfahrensablauf umgekehrt.

Es ist aber auch möglich, dass ein abgekoppelter Roboter den Aufzug verlässt, bevor die Aufzugfahrt beginnt. In diesem Fall kann vorgesehen sein, dass auf der Zieletage ein weiterer Roboter wartet und vor oder während des Herausfahrens des verfahrbaren Gegenstands aus dem Aufzug an den verfahrbaren Gegenstand ankoppelt. Das Verfahren kann auch so ausgestaltet sein, dass beide Roboter, die den verfahrbaren Gegenstand in den Aufzug hineingeschoben haben, vor der Aufzugfahrt den Aufzug verlassen. In diesem Fall ist es vorteilhaft, wenn zwei weitere Roboter auf der Zieletage an den verfahrbaren Gegenstand ankoppeln und den verfahrbaren Gegenstand aus dem Aufzug heraus bewegen.

Die Erfindung wird nachfolgend anhand der Beschreibung bevorzugter Ausführungsbeispiele, zum Teil mit Bezugnahmen auf die Zeichnung, näher erläutert.

In der Zeichnung zeigt
- Fig. 1: schematisch eine Seitenansicht einer bevorzugten Ausführungsform eines erfindungsgemäßen Robotersystems mit zwei Robotern,
- Fig. 2: schematisch eine Draufsicht eines Roboters aus Fig. 1,
- Fig. 3: schematisch eine Draufsicht des Roboters aus Fig. 1,
- Fig. 4: schematisch eine Seitenansicht des Robotersystems aus Fig. 1 mit einer bevorzugten Ausführungsform eines erfindungsgemäßen Krankenhausbettes,
- Fig. 5: schematisch eine Seitenansicht einer alternativen Ausführungsform eines Roboters des erfindungsgemäßen Robotersystems zusammen mit dem Krankenhausbett aus Fig. 4,
- Fig. 6: schematisch einen Längsschnitt durch eine weitere bevorzugte Ausführungsform eines Roboters des erfindungsgemäßen Robotersystems,
- Fig. 7: schematisch eine Seitenansicht einer weiteren bevorzugten Ausführungsform eines Roboters des erfindungsgemäßen Robotersystems,
- Fig. 8: schematisch einen Ausschnitt einer Draufsicht auf einen Teil einer Koppeleinrichtung eines Roboters eines erfindungsgemäßen Robotersystems zusammen mit einem Teil einer Koppeleinrichtung eines verfahrbaren Gegenstands,
- Fig. 9: schematisch eine Draufsicht einer weiteren bevorzugten Ausführungsform des erfindungsgemäßen Robotersystems zusammen mit einem Krankenhausbett in einem gekoppelten Zustand,
- Fig. 10: schematisch eine Seitenansicht einer alternativen Ausführungsform eines erfindungsgemäßen Robotersystems,
- Fig. 11: schematisch eine Seitenansicht einer bevorzugten Ausführungsform einer erfindungsgemäßen Koppeleinrichtung sowie dem Krankenhausbett aus Fig. 4,
- Fig. 12: schematisch eine Seitenansicht einer alternativen Ausführungsform einer erfindungsgemäßen Koppeleinrichtung,
- Fig. 13: schematisch in einer Draufsicht einen Ausschnitt eines Krankenhauses mit einer bevorzugten Ausführungsform eines erfindungsgemäßen Robotersystems und eines erfindungsgemäßen zentralen Steuersystems,
- Fig. 14A-E: schematisch in einer Draufsicht einen Ausschnitt eines Krankenhauses mit einem Flur und einem Aufzug sowie eine bevorzugte Ausführungsform eines erfindungsgemäßen, an ein Krankenhausbett angekoppelten Robotersystems zu verschiedenen Zeitpunkten vor, während und nach einer Fahrt mit dem Aufzug zur Veranschaulichung einer bevorzugten Ausführungsform eines erfindungsgemäßen Verfahrens zum Transportieren eines verfahrbaren Gegenstands, nämlich des Krankenhausbettes.

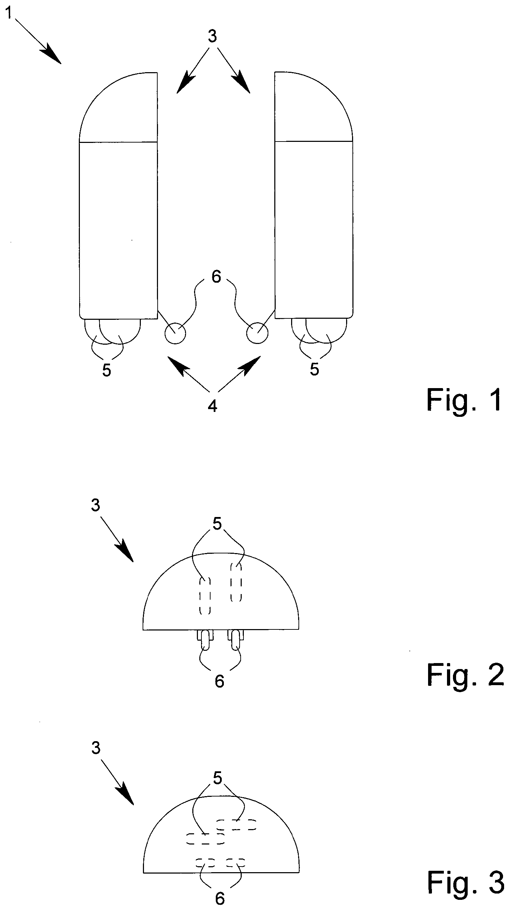

Fig. 1 zeigt schematisch eine Seitenansicht einer bevorzugten Ausführungsform eines erfindungsgemäßen Robotersystems 1 zum Transportieren eines verfahrbaren Gegenstandes, nämlich eines Krankenhausbettes 2. Das Robotersystem 1 umfasst zwei Roboter 3, wobei beide Roboter 3 jeweils an eine Koppeleinrichtung des Krankenhausbettes 2 derart koppelbar sind, dass eine Kraft von beiden Robotern 3 auf das Krankenhausbett 2 übertragbar ist, so dass die Roboter 3 gemeinsam das Krankenhausbett 2 transportieren können.

Beide Roboter 3 weisen jeweils ein Fahrwerk 4 mit zwei angetriebenen Rädern 5 sowie zwei antriebslosen Rädern 6 auf. Die beiden antriebslosen Räder 6 sind auf einen (nicht dargestellten) Untergrund, insbesondere einen Fußboden, hinunter und von dem Untergrund weg bewegbar. Bei dem in Fig. 1 dargestellten und bevorzugten Ausführungsbeispiel sind die beiden antriebslosen Räder 6 des Roboters 3 ein- und ausklappbar.

Die beiden angetriebenen Räder 5 des Roboters 3 sind - in Fig. 2 in horizontaler Richtung - voneinander beabstandet und - in Fig. 2 in vertikaler Richtung - zueinander versetzt angeordnet. Der Abstand und der Versatz zwischen den angetriebenen Rädern 5 sind dabei so gewählt, dass die beiden angetriebenen Räder 5 aus der in Fig. 2 gezeigten Position in die in Fig. 3 gezeigte Position (in diesem Fall also linksherum) gedreht werden können, ohne dass sich die beiden angetriebenen Räder 5 berühren, jedoch überlappen (in Fig. 3 in horizontaler Richtung). Diese Ausgestaltung erlaubt eine kompakte Bauweise und zugleich ein Manövrieren in alle erforderlichen Richtungen.

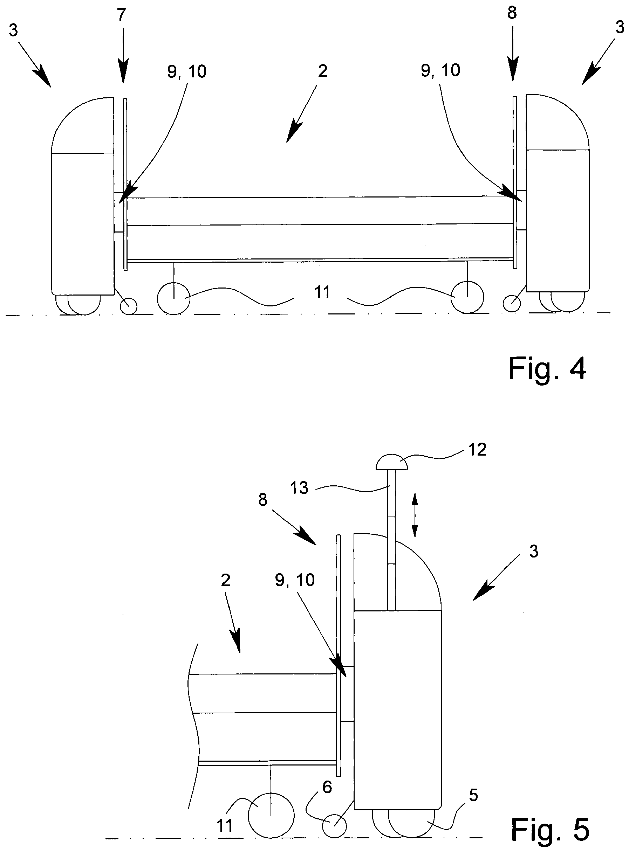

Fig. 4 zeigt schematisch in einer Seitenansicht die beiden Roboter 3 und eine bevorzugten Ausführungsform eines erfindungsgemäßen Krankenhausbettes, wobei beide Roboter 3 an das Krankenhausbett 2 gekoppelt sind. Beide Roboter 3 sind an einem vorderen Endbereich 7 und an einem hinteren Endbereich 8 des Krankenhausbettes 2 an- und abkoppelbar. In Fig. 4 ist der eine Roboter 3 an einem Kopfende 7 und der andere Roboter 3 an einem Fußende 8 an jeweils eine Koppeleinrichtung 9 des Krankenhausbettes 2 gekoppelt.

Beide Roboter 3 weisen jeweils eine zu den Koppeleinrichtungen 9 des Krankenhausbettes 2 passende Koppeleinrichtung 10 auf. Die Koppeleinrichtung 10 des jeweiligen Roboters 3 ist hinsichtlich ihrer Höhe, ihres Abstands und ihres seitlichen Versatzes relativ zu der jeweiligen Koppeleinrichtung 9 des Krankenhausbettes 2 so ausrichtbar, dass die Koppeleinrichtung 10 des jeweiligen Roboters 3 mit der jeweiligen Koppeleinrichtung 9 des Krankenhausbettes 2 koppelbar ist.

Bei dem in den Fig. 1 bis 4 dargestellten und bevorzugten Ausführungsbeispiel sind beide Roboter 3 so eingerichtet, dass sie das Krankenhausbett 2 vorwärts (in Fig. 4 also nach links), rückwärts (in Fig. 4 also nach rechts) und seitwärts (in Fig. 4 also in die Zeichnungsebene hinein und heraus) verfahren können, ohne das Krankenhausbett 2 anzuheben. Das Krankenhausbett 2 weist vier antriebslose Räder 11 auf, auf denen das Krankenhausbett 2 während eines Transports und während eines Koppelvorgangs verbleibt.

Fig. 5 zeigt schematisch in einer Seitenansicht eine weitere Ausführungsform eines Roboters 3 eines erfindungsgemäßen Robotersystems 1. Im Vergleich zu dem in den Fig. 1 bis 4 dargestellten Ausführungsbeispiel weist der Roboter 3 aus Fig. 5 ein Sensorsystem auf, wobei zumindest ein Teil 12 des Sensorsystems mittels einer Teleskopanordnung 13 derart höhenverstellbar ist, dass dieser Teil 12 über das Krankenhausbett 2 hinausragen kann. Bei dem in Fig. 5 dargestellten Ausführungsbeispiel ist der Teil 12 des Sensorsystems derart höhenverstellbar, dass er über einen Bettpfosten des Krankenhausbettes 2 hinausragen kann, so dass Messsignale des Teils 12 des Sensorsystems durch das Krankenhausbett 2 nicht blockiert werden.

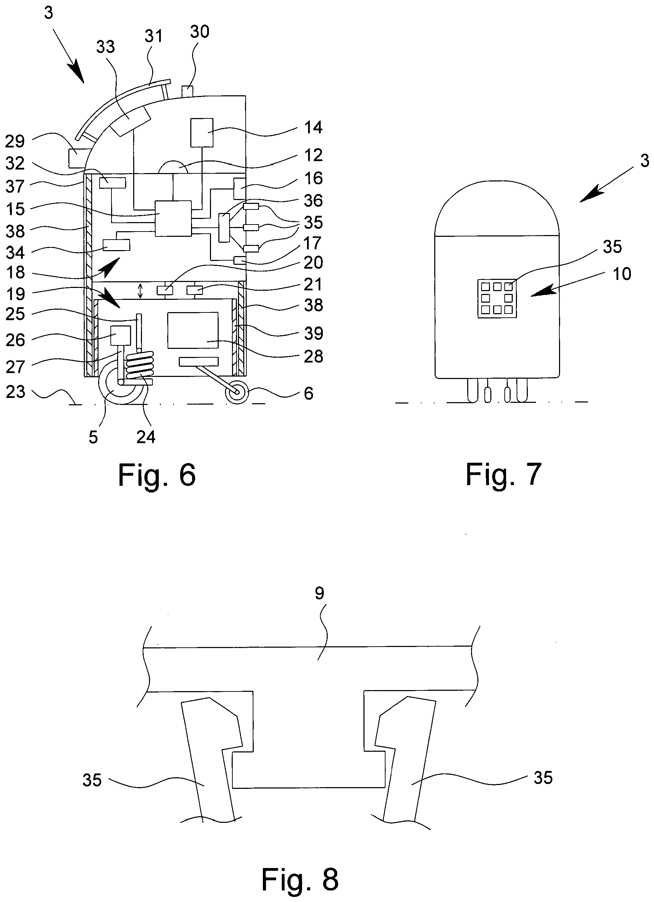

Fig. 6 zeigt schematisch einen Schnitt durch einen Roboter 3 einer weiteren bevorzugten Ausführungsform eines erfindungsgemäßen Robotersystems 1. In Fig. 6 ist nur ein Roboter 3 des Robotersystems 1 dargestellt. Der andere Roboter 3 ist bei dieser bevorzugten Ausführungsform genau so ausgebildet.

Der Roboter 3 weist eine Kommunikationseinrichtung 14 auf, die eine drahtlose Kommunikation mit der Kommunikationseinrichtung 14 eines anderen Roboters 3 und eines Aufzugs und eines zentralen Steuersystems ermöglicht.

Bei der Übermittlung eines Drahtlossignals zwischen der Kommunikationseinrichtung 14 des einen Roboters 3 und einer weiteren Kommunikationseinrichtung ist zu berücksichtigen, dass die beiden Kommunikationseinrichtungen typischerweise weniger als 300 m voneinander beabstandet sind. Die Übertragung des Drahtlossignals findet typischerweise innerhalb eines Gebäudes, im Falle der Kommunikation zwischen zwei Robotern 3 typischerweise innerhalb eines Raumes statt. Wichtig ist eine robuste und zuverlässige Übertragung auch ohne direkte Sichtverbindung, so dass das Drahtlossignal von der jeweiligen Kommunikationseinrichtung korrekt empfangen werden kann. Grundsätzlich kommen als Drahtlostechnologie dementsprechend WLAN- und WPAN-Technologien in Frage. Vorzugsweise kommt als Drahtlostechnologie Bluetooth zum Einsatz. Aufgrund der Energiesparsamkeit ist die Bluetooth-Version 4.0 (Low Energy) besonders bevorzugt.

Der Roboter 3 in Fig. 6 weist außerdem eine Steuereinrichtung 15 auf, die unter anderem zur Steuerung des Fahrwerks 4 des Roboters 3 und von elektronischen Schaltungen des Roboters 3 (wie der Kommunikationseinrichtung 14) dient.

Der Roboter 3 ist so ausgebildet, dass Steuerbefehle der Steuereinrichtung 15 des einen Roboters 3 mit der Steuereinrichtung 15 des anderen Roboters 3 abstimmbar sind. Insbesondere ist der Roboter 3 so ausgebildet, dass Steuerinformationen des einen Roboters 3 mittels der Kommunikationseinrichtung 14 des einen Roboters 3 an die Kommunikationseinrichtung 14 des anderen Roboters 3 drahtlos übermittelbar sind. Der andere Roboter 3 wertet die empfangenen Steuerinformationen aus und kann daraufhin Steuerbefehle für die eigene Steuereinrichtung 15 und/oder für die Steuereinrichtung 15 des einen Roboters 3 generieren. Letztere können dann wiederum drahtlos an die Kommunikationseinrichtung 14 des einen Roboters 3 übermittelt werden.

Der Roboter 3 weist eine Detektionseinrichtung 16 zur Detektion und Lokalisierung beider Koppeleinrichtungen 9 des Krankenhausbettes 2 auf. Die Detektionseinrichtung 16 weist eine Leseeinheit auf, die zum Auslesen einer das Krankenhausbett 2 und/oder einen das Krankenhausbett 2 belegenden Patienten identifizierenden Kennung eines Transponders ausgebildet ist. Die Leseeinheit korrespondiert mit einem RFID-Transponder und kann mittels magnetischer Wechselfelder und/oder hochfrequenter Radiowellen eine Kopplung mit dem RFID-Transponder herstellen.

Der Roboter 3 hat außerdem einen Abstandssensor 17. Mit Hilfe des Abstandssensors 17 kann der Roboter 3 den jeweiligen Abstand eines Bezugspunkts des Roboters 3 zum Krankenhausbett 2 und insbesondere zu einer der beiden Koppeleinrichtungen 9 des Krankenhausbettes 2 bestimmen. Diese Information kann der Roboter 3 zum Koppeln verwenden. Außerdem kann der Roboter 3 den Abstandssensor 17 dazu benutzen, um die Entfernung zu Hindernissen wie unbewegten Gegenständen und beweglichen Personen zu ermitteln.

Bei dem in Fig. 6 dargestellten Ausführungsbeispiel weist der Roboter 3 ein Oberteil 18 sowie ein Unterteil 19 auf. Zwischen dem Oberteil 18 und dem Unterteil 19 sind ein Elektromotor 20 und ein Drucksensor 21 so angebracht, dass der Roboter 3 mittels des Elektromotors 20 höhenverstellbar ist, wobei die Höhenverstellung mittels des Drucksensors 21 steuer- oder regelbar ist.

Bei dem in Fig. 6 dargestellten Ausführungsbeispiel sind beide angetriebenen Räder 5 mittels jeweils einer Stelleinrichtung 22 auf einen Untergrund, insbesondere einen Fußboden 23, drückbar. Die Stelleinrichtung 22 umfasst eine Feder 24 und eine damit zusammenwirkende Hydraulik 25. Auf diese Weise wird eine Traktionskontrolle bzw. Antischlupfregelung realisiert. Es ist auch möglich, eine gemeinsame Stelleinrichtung 22 für beide angetriebenen Räder 5 einzusetzen.

Jedes angetriebene Rad 5 wird mittels eines Elektromotors 26 und eines Getriebes 27 angetrieben.

Bei dem in Fig. 6 dargestellten Ausführungsbeispiel weist der Roboter 3 einen Energiespeicher, nämlich einen Akkumulator 28 auf, der mittels einer (nicht dargestellten) Ladestation wiederaufladbar ist. Der Roboter 3 ist so ausgebildet, dass er autonom zum Aufladen zu einer Ladestation bewegbar ist. Der Akkumulator 28 ist im Unterteil 19 des Roboters 3 angeordnet. Aufgrund des Gewichts des Akkumulators 28 wird damit der Massenschwerpunkt des Roboters 3 nach unten verlagert. Dies erhöht die Stabilität und Kippfestigkeit des Roboters 3.

Bei dem in Fig. 6 dargestellten Ausführungsbeispiel weist der Roboter 3 einen Lautsprecher 29, ein Mikrofon 30 und einen Touchscreen 31 auf. Der Roboter 3 ist so eingerichtet, dass mittels des Touchscreens 31 und des Mikrofons 30 Zieleingaben von einer Person vorgenommen werden können. Mittels des Touchscreens 31 und des Lautsprechers 29 können Audio- und Bilddaten wiedergegeben werden. Durch Abstimmung mit dem anderen Roboter 3 kann diese Wiedergabe durch den einen Roboter 3 synchron mit dem anderen Roboter 3 erfolgen.

Außerdem sind bei dem in Fig. 6 dargestellten Ausführungsbeispiel noch weitere Sensoren 32, 33, 34 vorgesehen.

Bei dem in Fig. 6 dargestellten Ausführungsbeispiel weist der Roboter 3 acht Koppelelemente 35 auf, die mittels eines Elektromotors 36 aus einer entkoppelten Position in eine gekoppelte Position und umgekehrt bewegbar sind.

Bei dem in Fig. 6 dargestellten Ausführungsbeispiel weist der Roboter 3 eine entgratete Außenwand 37, vorzugsweise aus Kunststoff, und einen Mantel 38, vorzugsweise aus Metall, auf. Das Unterteil 19 des Roboters 3 weist außerdem einen Hohlzylinder, vorzugsweise aus Metall, auf.

Die Koppeleinrichtung 10 des Roboters 3 mit den acht Koppelelementen 35 zeigt Fig. 7 schematisch in einer Seitenansicht eines Roboters 3 eines erfindungsgemä-ßen Robotersystems 1. Die acht Koppelelemente 35 sind auf einem gedachten Rechteck angeordnet. Im Zentrum dieses gedachten Rechtecks ist kein Koppelelement 35 vorgesehen. In dieser "Lücke" befindet sich im gekoppelten Zustand des Roboters 3 mit dem Krankenhausbett 2 vielmehr ein Teil der Koppeleinrichtung 9 des Krankenhausbettes 2.

Zum Koppeln werden die Koppelelemente 35 mittels des Elektromotors 36 in eine entkoppelte Position bewegt, z. B. geneigt. Der Roboter 3 richtet seine Koppeleinrichtung 10 zur Koppeleinrichtung 9 des Krankenhausbettes 2 entsprechend aus und nähert sich der Koppeleinrichtung 9 des Krankenhausbettes 2. Befindet sich die Koppeleinrichtung 9 des Krankenhausbettes 2 weit genug in der "Lücke", bewegt der Elektromotor 36 die Koppelelemente 35 aus der entkoppelten Position in eine gekoppelte Position. In dieser gekoppelten Position können die Koppelelemente 35 z. B. hinter einen Vorsprung oder in eine Aussparung der Koppeleinrichtung 9 des Krankenhausbettes 2 greifen, wie es in Fig. 8 schematisch dargestellt ist.

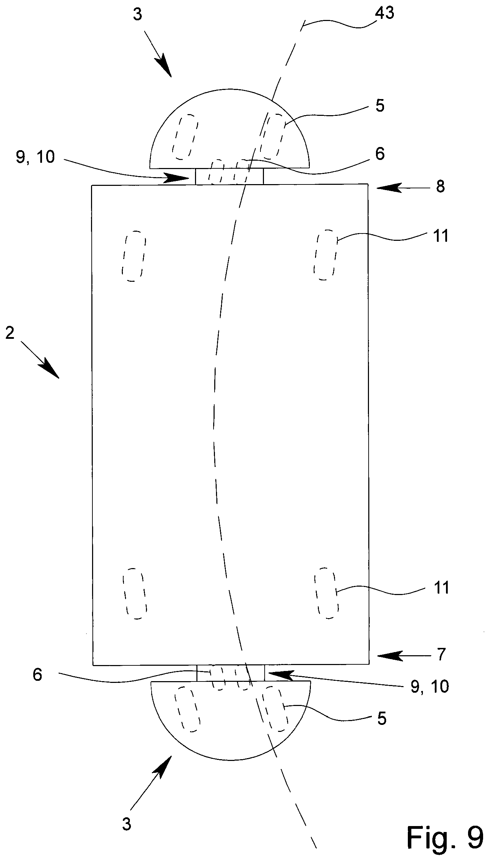

Fig. 9 zeigt schematisch eine Draufsicht auf eine weitere bevorzugte Ausführungsform des erfindungsgemäßen Robotersystems 1, wobei beide Roboter 3 an ein Krankenhausbett 2 gekoppelt sind. Der eine Roboter 3 ist an einem in Fahrtrichtung vorderen Endbereich 7 des Krankenhausbettes 2 (Fußende) und der andere Roboter 3 an einem in Fahrtrichtung hinteren Endbereich 8 des Krankenhausbettes 2 (Kopfende) mittels der Koppeleinrichtung 10 des jeweiligen Roboters 3 an eine von zwei Koppeleinrichtungen 9 des Krankenhausbettes 2 angekoppelt. Das erfindungsgemäße Robotersystem 1 transportiert das Krankenhausbett 2 hier von einem Abholort zu einem Zielort und verfährt dabei zusammen mit dem Krankenhausbett 2 auf einer Kurve, wobei in Fig. 9 eine Mittellinie 40 den Kurvenverlauf andeutet.

Der Roboter 3, der am Kopfende 7 des Krankenhausbettes 2 an die dortige Koppeleinrichtung 9 des Krankenhausbettes 2 gekoppelt ist, hat bei diesem Ausführungsbeispiel die Master-Rolle inne. Der Master-Roboter 3 steuert mittels Steuerbefehlen das eigene Fahrwerk 4, insbesondere die beiden angetriebenen Räder 5, sowie mittels drahtlos an den anderen Roboter 3 (Slave-Roboter) übertragenen Steuerbefehlen das Fahrwerk 4 des Slave-Roboters 3, insbesondere dessen angetriebene Räder 5.

So illustriert Fig. 9, wie die beiden angetriebenen Räder 5 und infolgedessen auch die beiden antrieblosen Räder 6 des Maser-Roboters eine Neigung annehmen, die dem Teilstück der Mittellinie 40, an dem sich die Räder 5, 6 des Master-Roboters 3 befinden, entspricht. Infolge der mittels Steuerbefehlen bewirkten Neigung der Räder 5 des Master-Roboters 3 stellt sich eine unterschiedliche aber korrespondierende Neigung (im vorliegenden Fall eine geringere Neigung) der antrieblosen Räder 6 des Master-Roboters 3 und der antriebslosen Räder 11 des Krankenhausbettes 2, die im vorderen Endbereich 7 des Krankenhausbettes 2 angebracht sind, ein.

Aufgrund der drahtlos an den Slave-Roboter 3 übertragenen Steuerbefehle nehmen die angetriebenen Räder 5 des Slave-Roboters 3 eine dem Kurvenverlauf entsprechende andere Neigung ein. Infolgedessen nehmen auch die antriebslosen Räder 6 des Slave-Roboters 3 und die antriebslosen Räder 11 des Krankenhausbettes 2, die sich am hinteren Ende 8 des Krankenhausbettes 2 befinden, eine nochmals andere aber auch dem Kurvenverlauf entsprechende Neigung ein. Der Master-Roboter übermittelt dem Slave-Roboter 3 insbesondere Steuerinformationen hinsichtlich des Kurvenverlaufs, ganz besonders des Kurvenradius und der Kurvenlänge, sowie hinsichtlich etwaiger Hindernisse.

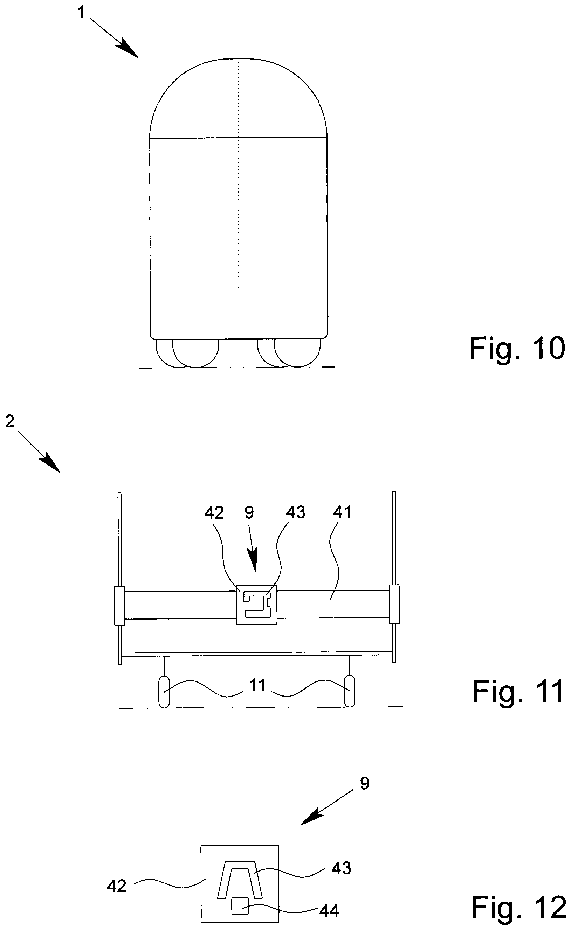

Fig. 10 zeigt schematisch in einer Seitenansicht eine weitere bevorzugte Ausführungsform des erfindungsgemäßen Robotersystems 1. Bei dieser Ausführungsform sind beide Roboter 3 miteinander verbindbar und in Fig. 10 auch miteinander verbunden. Die beiden verbundenen Roboter 3 sind zusammen als eine Einheit bewegbar. Als eine Einheit verbunden können die beiden Roboter 3 Ressourcen, wie z. B. einen Energiespeicher oder eine Kommunikationseinrichtung, gemeinsam nutzen. Zum gemeinsamen Verbinden werden die beiden antriebslosen Räder 6 des jeweiligen Roboters 3 beispielsweise so in den jeweiligen Roboter 3 hineinbewegt, dass sie zum Verbinden der beiden Roboter 3 nicht im Weg sind.

Die beiden zur Einheit verbundenen Roboter 3 lassen sich bei diesem Ausführungsbeispiel auch wieder in die beiden separaten Roboter 3 teilen, so dass beide Roboter 3 in jeweils unterschiedliche Richtungen bewegbar sind. So kann z. B. die Einheit aus den beiden verbundenen Robotern 3 zu einem Abholort fahren und sich am Abholort in die beiden Roboter 3 teilen, die dann an den verfahrbaren Gegenstand 2 gekoppelt werden können.

Fig. 11 zeigt schematisch in einer Seitenansicht eine bevorzugte Ausführungsform einer erfindungsgemäßen Koppeleinrichtung 9 zum Koppeln eines verfahrbaren Gegenstands, nämlich eines Krankenhausbettes 2, mit einem Roboter 3 eines erfindungsgemäßen Robotersystems 1. Die Koppeleinrichtung 9 ist an dem Krankenhausbett 2 anbringbar. Bei dem in Fig. 11 dargestellten Ausführungsbeispiel ist die Koppeleinrichtung 9 an einem vorderen Endbereich 7 des Krankenhausbettes 2, und zwar an einem Befestigungselement 41 des Krankenhausbettes 2, angebracht.

Die Koppeleinrichtung 9 weist eine Koppelplatte 42, ein Koppelelement 43 und einen (nicht dargestellten) RFID-Transponder zur Identifikation des Krankenhausbettes 2 auf. Mittels des RFID-Transponders sind eine Kennung und ein Positionssignal drahtlos übermittelbar. Die Kennung erlaubt die Identifikation des Krankenhausbettes 2 und, optional, eines darin befindlichen Patienten. Das Positionssignal ist so ausgebildet, dass mit ihm die Position der Koppeleinrichtung 9 am Krankenhausbett 2 ermittelbar ist. Außerdem kann anhand des Positionssignals ermittelt werden, dass die Koppeleinrichtung 9 am vorderen Endbereich 7 des Krankenhausbettes 2 angebracht ist.

Fig. 12 zeigt schematisch in einer Seitenansicht eine alternative Ausführungsform einer erfindungsgemäßen Koppeleinrichtung 9 zum Koppeln eines Krankenhausbettes 2 mit einem Roboter 3 eines erfindungsgemäßen Robotersystems 1. In Fig. 12 ist die Koppeleinrichtung 9 nicht an dem Krankenhausbett 2 angebracht. Die Koppeleinrichtung 9 weist wiederum eine Koppelplatte 42 und ein Koppelelement 43 auf. Bei dieser Ausführungsform ist das Koppelelement 43 im Vergleich zur Ausführungsform von Fig. 11 anders geformt, und zwar ähnlich einem umgedrehten "U". In Fig. 12 unter dem Koppelelement 43 hat die Koppeleinrichtung 9 eine Identifikationseinrichtung 44, nämlich einen Strichcode 44.

Bei der in Fig. 12 dargestellten Ausführungsform kann ein Roboter 3 eines erfindungsgemäßen Robotersystems 1 mit einer korrespondierenden Koppeleinrichtung 10 des Roboters 3 sich an die dargestellte Koppeleinrichtung 9 dadurch koppeln, dass die Koppeleinrichtung 10 des Roboters 3 von unten nach oben gegen das Koppelelement 43 bewegt wird, wenn der Roboter 3 bzw. dessen Koppeleinrichtung 10 nahe genug an der Koppeleinrichtung 9 ist. Wenn die Koppeleinrichtung 10 des Roboters 3 die Koppeleinrichtung 9 berührt, kann dann ein Koppelelement der Koppeleinrichtung 10 des Roboters 3 derart in Eingriff mit dem Koppelelement 43 der Koppeleinrichtung 9 stehen, dass eine starre, kraft- und formschlüssige Verbindung zwischen den beiden Koppeleinrichtungen 9, 10 besteht.

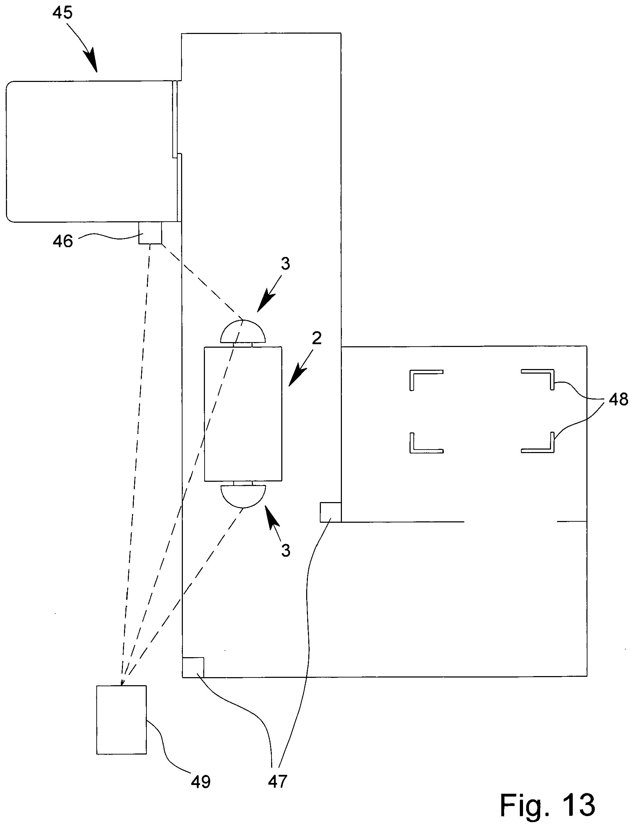

Fig. 13 zeigt schematisch in einer Draufsicht einen Teil eines Krankenhauses mit einem Flur, einem Patientenzimmer und einem Aufzug 45. Der Aufzug 45 hat eine Kommunikationseinrichtung 46.

Fig. 13 zeigt außerdem eine bevorzugte Ausführungsform eines erfindungsgemä-ßen Krankenhausbettes 2 und eines erfindungsgemäßen Robotersystems 1 mit zwei Robotern 3, die an das Krankenhausbett 2 gekoppelt sind und dieses auf dem Flur des Krankenhauses transportieren.

Auf dem Flur sind zwei Funkbaken 47 angeordnet. Bei den Funkbaken 47 handelt es sich um ortsfeste Funksender mit vorbekannter Position, die der Orientierung bzw. Navigation der Roboter 3 bzw. des Robotersystems 1 dienen.

Fig. 13 zeigt des Weiteren vier Markierungen 48 auf dem Fußboden des Patientenzimmers. Solche Markierungen 48 können auch an einem Abholort auf einem Flur oder einer Bettenstation angeordnet sein. Diese Markierungen 48 dienen der Orientierung bzw. Navigation für die Roboter 3 bzw. das Robotersystem 1. Insbesondere umranden die Markierungen 48 einen Zielbereich, in dem ein zu transportierendes Krankenhausbett 2 abgestellt oder abgeholt werden soll.

Darüberhinaus zeigt Fig. 13 eine bevorzugte Ausführungsform eines erfindungsgemäßen zentralen Steuersystems für das Robotersystem 1 mit den beiden Robotern 3. Das zentrale Steuersystem 49 kann auf einer Datenverarbeitungsanlage implementiert sein.

Das zentrale Steuersystem 49 weißt mindestens eine Kommunikationseinrichtung und mindestens eine Steuereinheit auf. Das Robotersystem 1 kann mittels der Kommunikationseinrichtung 14 des jeweiligen Roboters 3 mit der Kommunikationseinrichtung 46 des Aufzugs 45 und mit der Kommunikationseinrichtung des zentralen Steuersystems 49 kommunizieren, wie es in Fig. 13 durch gestrichelte Linien angedeutet ist. Das zentrale Steuersystem 49 ist zur Steuerung der Roboter 3 des Robotersystems 1, zur Überwachung der Funktionen der Roboter 3, zum Melden von Störungen der Roboter 3, zur Auswertung und Dokumentation von Prozessen der Roboter 3 und zur Aktualisierung einer Software der Roboter 3 ausgebildet. Außerdem ist das zentrale Steuersystem 49 zur Steuerung des Aufzugs 45 ausgebildet.

Im Folgenden wird eine bevorzugte Ausführungsform des erfindungsgemäßen Verfahrens zum Transportieren eines verfahrbaren Gegenstands, nämlich eines Krankenhausbettes 2, mit einem erfindungsgemäßen Robotersystem 1 erläutert.

Vor dem Transport des Krankenhausbettes 2 koppeln die beiden Roboter 3 des Robotersystems 1 derart an das Krankenhausbett 2, nämlich an eine Koppeleinrichtung 9 des Krankenhausbettes 2, dass eine Kraft von beiden Robotern 3 auf das Krankenhausbett 2 übertragbar ist, so dass die Roboter 3 gemeinsam das Krankenhausbett 2 transportieren können.

Der eine Roboter 3 ist dabei an einem vorderen Endbereich 7 des Krankenhausbettes 2 und der andere Roboter 3 an einem hinteren Endbereich 8 des Krankenhausbettes 2 angekoppelt. Die Roboter 3 transportieren das Krankenhausbett 2 mittels Schieben, Ziehen und seitwärts bewegen zu einem Ziel, ohne das Krankenhausbett 2 anzuheben.

Beide Roboter 3 detektieren und lokalisieren mittels einer Detektionseinrichtung jeweils eine Koppeleinrichtung 9 des Krankenhausbettes 2. Beide Roboter 3 nähern sich jeweils einer der beiden Koppeleinrichtungen 9 des Krankenhausbettes 2 und richten zum Koppeln mit der jeweiligen Koppeleinrichtung 9 des Krankenhausbettes 2 eine zur jeweiligen Koppeleinrichtung 9 des Krankenhausbettes 2 passende Koppeleinrichtung 10 hinsichtlich ihrer Höhe, ihres Abstands und ihres seitlichen Versatzes relativ zur jeweiligen Koppeleinrichtung 9 des Krankenhausbettes 2 aus. Die beiden Roboter 3 bewegen ihre Koppeleinrichtung 10, insbesondere ein Koppelelement 35, mittels eines Elektromotors aus einer entkoppelten Position in eine gekoppelte Position, so dass die Koppeleinrichtung 10 des jeweiligen Roboters 3, insbesondere dessen Koppelelemente 35, mit der jeweiligen Koppeleinrichtung 9 des Krankenhausbettes 2 in Eingriff steht.

Der eine Roboter 3 kommuniziert mittels einer Kommunikationseinrichtung 14 drahtlos mit der Kommunikationseinrichtung 14 des anderen Roboters 3 und, optional, mit der Kommunikationseinrichtung eines Aufzug und/oder eines zentralen Steuersystems.

Der eine Roboter 3 stimmt Steuerbefehle einer Steuereinrichtung 15 des einen Roboters 3 zur Steuerung eines Fahrwerks 4 des einen Roboters 3 mit der Steuereinrichtung 15 des anderen Roboters 3 ab. Insbesondere übermittelt der eine Roboter 3 Steuerinformationen mittels der Kommunikationseinrichtung 14 des einen Roboters 3 an die Kommunikationseinrichtung 14 des anderen Roboters 3 drahtlos.

Beide Roboter 3 sind vor Transportbeginn miteinander verbunden und bewegen sich zusammen als eine Einheit zu einem Abholort. Beide Roboter 3 teilen sich am Abholort. Zum Teilen und zum Abkoppeln vom Krankenhausbett 2 bewegen beide Roboter 3 zur Stützung des jeweiligen Roboters 3 zwei antriebslose Räder 6 des Fahrwerks 4 auf einen Untergrund, insbesondere einen Fußboden, hinunter.

Der eine Roboter 3 übermittelt mittels einer Eingabeeinrichtung eingegebene Informationen an den anderen Roboter 3 drahtlos. Der eine Roboter 3 nimmt eine Audio- und Bildwiedergabe synchron mit dem anderen Roboter 3 vor.

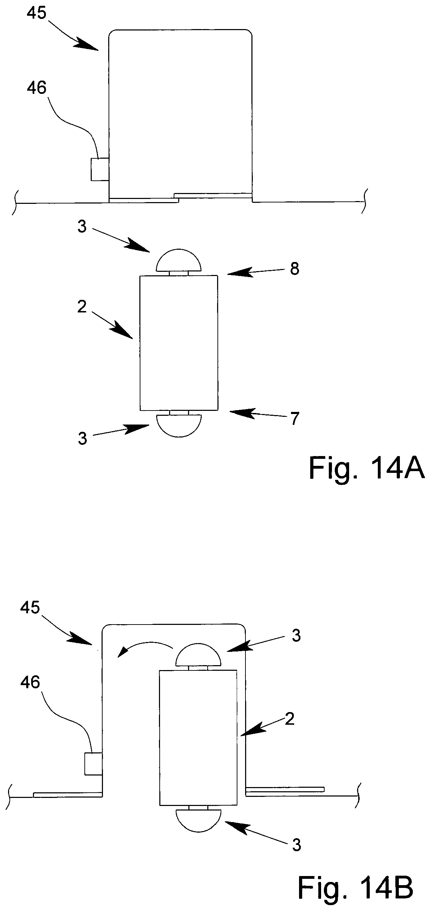

Beim Transportieren des Krankenhausbettes 2 durch das Robotersystem 1 mittels eines Aufzugs sind bei einer bevorzugten, in Fig. 14A-E schematisch veranschaulichten Ausführungsform des erfindungsgemäßen Verfahrens folgende Schritte vorgesehen.

Fig. 14A: Zunächst sind beide Roboter 3 am Krankenhausbett 2 angekoppelt, und zwar der eine Roboter 3 an einem vorderen Endbereich 7 des Krankenhausbettes 2 und der andere Roboter 3 an einem hinteren Endbereich 8 des Krankenhausbettes 2. Die Roboter 3 zusammen mit dem Krankenhausbett 2 befinden sich vor einem Aufzug 45 auf einem Flur des Krankenhauses. Das Robotersystem 1 oder das zentrale Steuersystem 49 haben mittels einer Kommunikationseinrichtung drahtlos mit einer Kommunikationseinrichtung 46 des Aufzugs 45 kommuniziert, um den Aufzug 45 zum Fahren zur und zum Halten auf der Etage, auf der sich das Robotersystem 1 zusammen mit dem Krankenhausbett 2 befindet, zu veranlassen.

Fig. 14B: Der Aufzug 45 hat auf der Etage, auf der sich die Roboter 3 zusammen mit dem Krankenhausbett 2 befinden, gehalten und seine Tür bzw. seine Türen geöffnet. Beide Roboter 3 bewegen das Krankenhausbett 2 gemeinsam in den Aufzug 45. In einem ausreichenden Abstand zu einer hinteren Wand des Aufzugs 45 halten die Roboter 3 zusammen mit dem Krankenhausbett 2 an. Der Roboter 3, der an dem näher an der hinteren Wand des Aufzugs 45 befindlichen Endbereich (hier an dem vorderen Endbereich 7) am Krankenhausbett 2 angekoppelt ist, koppelt vom Krankenhausbett 2 ab und bewegt sich zur Seite (in Fig. 14B nach links) und bleibt im Aufzug 45 stehen.

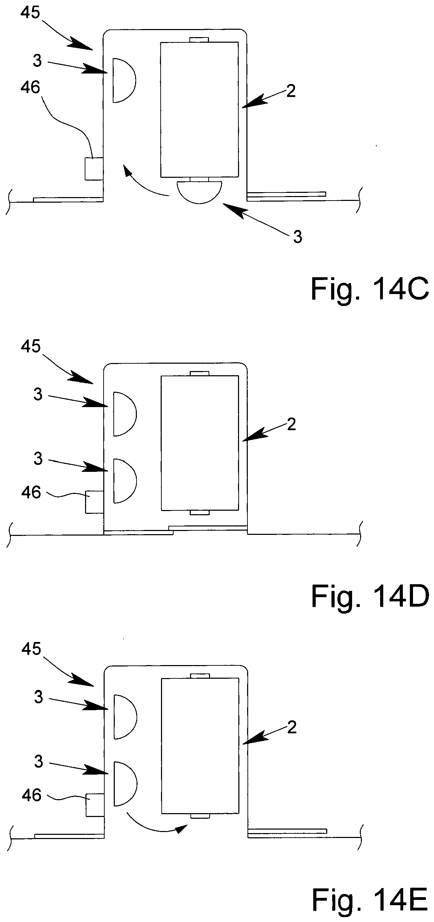

Fig. 14C: Der andere Roboter 3 (am hinteren Endbereich 8 angekoppelt) bewegt das Krankenhausbett 2 so in den Aufzug 45, dass es sich vollständig im Aufzug 45 befindet. Dann hält dieser andere Roboter 3 das Krankenhausbett 2 an und bewirkt eine Feststellung des Krankenhausbettes 2.

Fig. 14D: Der andere Roboter 3 koppelt ebenfalls vom Krankenhausbett 2 ab und bewegt sich zur Seite (in Fig. 14D nach links) in den Aufzug 45 und bleibt im Aufzug 45 stehen. Nun schließt sich die Tür bzw. schließen sich die Türen des Aufzugs 45 und der Aufzug 45 fährt nach oben oder unten zusammen mit den beiden Robotern 3 und dem Krankenhausbett 2. Beide Roboter 3 verbleiben seitlich neben dem Krankenhausbett 2 im Aufzug 45 während der Aufzugfahrt.

Fig. 14E: Auf einer Zieletage angekommen, öffnet sich die Tür bzw. öffnen sich die Türen des Aufzugs 45 auf der Seite, durch die das Einfahren erfolgte. Der andere Roboter 3 koppelt wieder an das Krankenhausbett 2 an, und zwar am vorderen Endbereich 7.

Der andere Roboter 3 bewegt ein Teil des Krankenhausbettes 2 aus dem Aufzug 45 heraus und hält dann an. Anschließend koppelt der eine Roboter 3 am Krankenhausbett 2 an, und zwar am hinteren Endbereich 8. Dann bewegen beide Roboter 3 das Krankenhausbett 2 vollständig aus dem Aufzug 45 heraus und transportieren das Krankenhausbett 2 zum Zielort.

### Bezugszeichenliste:

- 1: Robotersystem
- 2: Krankenhausbett
- 3: Roboter
- 4: Fahrwerk von 3
- 5: angetriebenes Rad von 3
- 6: antriebsloses Rad von 3
- 7: vorderer Endbereich von 2
- 8: hinterer Endbereich von 2
- 9: Koppeleinrichtung von 2
- 10: Koppeleinrichtung von 3
- 11: Rad von 2
- 12: Teil eines Sensorsystems von 3
- 13: Teleskopanordnung von 3
- 14: Kommunikationseinrichtung von 3
- 15: Steuereinrichtung von 3
- 16: Detektionseinrichtung von 3
- 17: Abstandssensor von 3
- 18: Oberteil von 3
- 19: Unterteil von 3
- 20: Elektromotor von 3
- 21: Drucksensor von 3
- 22: Stelleinrichtung für 5
- 23: Untergrund
- 24: Feder von 22
- 25: Hydraulik von 22
- 26: Elektromotor für 5
- 27: Getriebe für 5
- 28: Akkumulator von 3
- 29: Lautsprecher von 3
- 30: Mikrofon von 3
- 31: Touchscreen von 3
- 32: Sensor von 3
- 33: Sensor von 3
- 34: Sensor von 3
- 35: Koppelelement von 10
- 36: Elektromotor für 35
- 37: Außenwand von 3
- 38: Mantel von 3
- 39: Hohlzylinder von 3
- 40: Mittellinie einer Kurve
- 41: Befestigungselement von 2
- 42: Koppelplatte von 9
- 43: Koppelelement von 9
- 44: Identifikationseinrichtung von 9
- 45: Aufzug
- 46: Kommunikationseinrichtung von45
- 47: Funkbake
- 48: Markierung
- 49: zentrales Steuersystem

## Patentansprüche

1. Robotersystem (1) zum Transportieren eines verfahrbaren Gegenstands (2), insbesondere eines Krankenhausbettes, wobei das Robotersystem (1) zwei Roboter (3) umfasst und beide Roboter (3) jeweils an den verfahrbaren Gegenstand (2), insbesondere an eine Koppeleinrichtung (9) des verfahrbaren Gegenstands (2), derart koppelbar sind, dass eine Kraft von mindestens einem der Roboter (3) auf den verfahrbaren Gegenstand (2) übertragbar ist, so dass die Roboter (3) gemeinsam den verfahrbaren Gegenstand (2) transportieren können,
**dadurch gekennzeichnet, dass**
beide Roboter (3) miteinander verbindbar und dann zusammen als eine Einheit bewegbar sind und die Einheit wieder in beide Roboter (3) teilbar ist, so dass beide Roboter (3) in jeweils unterschiedliche Richtungen bewegbar sind.

2. Robotersystem nach Anspruch 1, **dadurch gekennzeichnet, dass** beide Roboter (3) jeweils ein Fahrwerk (4) mit mindestens einem angetriebenen Rad (5) aufweisen und das angetriebene Rad (5) mittels einer Stelleinrichtung (22) auf einen Untergrund (23) drückbar ist.

3. Robotersystem nach Anspruch 2, **dadurch gekennzeichnet, dass** das Fahrwerk (4) mindestens ein weiteres, auf einen Untergrund (23) hinunter und von dem Untergrund (23) weg bewegbares Rad (6) aufweist.

4. Robotersystem nach einem der voranstehenden Ansprüche, **dadurch gekennzeichnet, dass** mindestens ein Roboter (3) ein Sensorsystem aufweist und zumindest ein Teil (12) des Sensorsystems (1) derart höhenverstellbar ist, dass dieser Teil (12) über den verfahrbaren Gegenstand (2) hinausragen kann.

5. Robotersystem nach einem der voranstehenden Ansprüche, **dadurch gekennzeichnet, dass** mindestens ein Roboter (3) so eingerichtet ist, dass er ermitteln kann, ob der verfahrbare Gegenstand (2), insbesondere ein Fahrwerk (4) des verfahrbaren Gegenstands (2), blockiert ist.

6. Robotersystem nach einem der voranstehenden Ansprüche, **dadurch gekennzeichnet, dass** beide Roboter (3) eingerichtet sind, den verfahrbaren Gegenstand (2) ohne Anheben des verfahrbaren Gegenstands (2) vorwärts, rückwärts und seitwärts zu verfahren.

7. Krankenhausbett (2) mit einem Robotersystem (1) gemäß einem der Ansprüche 1 bis 6, wobei beide Roboter (3) des Robotersystems (1) an das Krankenhausbett (2) gekoppelt sind.

8. Verfahren zum Transportieren eines verfahrbaren Gegenstands (2), insbesondere eines Krankenhausbettes, mit einem Robotersystem (1), wobei zwei Roboter (3) des Robotersystems (1) an den verfahrbaren Gegenstand (2) derart koppeln, dass eine Kraft von mindestens einem der Roboter (3) auf den verfahrbaren Gegenstand (2) übertragbar ist, so dass die Roboter (3) gemeinsam den verfahrbaren Gegenstand (2) transportieren können,
**dadurch gekennzeichnet, dass**
beide Roboter (3) vor Transportbeginn miteinander verbunden sind und sich zusammen als eine Einheit zu einem Abholort bewegen und am Abholort in beide Roboter (3) teilen.

9. Verfahren nach Anspruch 8, **dadurch gekennzeichnet, dass** einer der Roboter (3) an einem vorderen Endbereich (7) des verfahrbaren Gegenstands (2) ankoppelt und der andere Roboter an einem hinteren Endbereich (8) des verfahrbaren Gegenstands (2) ankoppelt und die Roboter (3) den verfahrbaren Gegenstand (2) durch Schieben und/oder Ziehen und/oder seitwärts Bewegen zu einem Ziel transportieren, ohne den verfahrbaren Gegenstand (2) anzuheben.

10. Verfahren nach Anspruch 8 oder 9, **dadurch gekennzeichnet, dass** zum Teilen und/oder Abkoppeln vom verfahrbaren Gegenstand (2) beide Roboter (3) zur Stützung des jeweiligen Roboters (3) jeweils mindestens ein Rad (6) eines Fahrwerks (4) auf einen Untergrund (23) hinunter bewegen.

11. Verfahren nach einem der Ansprüche 8 bis 10, **dadurch gekennzeichnet, dass** zumindest ein Teil (12) eines Sensorsystems des einen Roboters (3) derart höhenverstellt wird, dass dieser Teil (12) zur Erfassung von Sensordaten über den verfahrbaren Gegenstand (2) hinausragt.

12. Verfahren nach einem der Ansprüche 8 bis 11, **dadurch gekennzeichnet, dass** der eine Roboter (3) vor Transportbeginn ermittelt, ob der verfahrbare Gegenstand (2), insbesondere ein Fahrwerk (4) des verfahrbaren Gegenstands (2), blockiert ist.

## Claims

1. Robot system (1) for transporting a movable object (2), in particular a hospital bed, wherein the robot system (1) comprises two robots (3) and both robots (3) can each be coupled to the movable object (2), in particular to a coupling device (9) of the movable object (2), in such a way that a force from at least one of the robots (3) is transferrable to the movable object (2) such that the robots (3) can jointly transport the movable object (2),
**characterized in that**
both robots (3) are connectable to each other and then movable together as one unit, and the unit is separatable again into both robots (3) so that both robots (3) are movable in respectively different directions.

2. Robot system according to claim 1, **characterized in that** both robots (3) each have a chassis (4) with at least one driven wheel (5) and the driven wheel (5) can be pressed onto a base (23) by means of an adjusting device (22).

3. Robot system according to claim 2, **characterized in that** the chassis (4) has at least one further wheel (6) which can be moved down onto a base (23) and away from the base (23).

4. Robot system according to one of the preceding claims, **characterized in that** at least one robot (3) has a sensor system and at least one part (12) of the sensor system (1) is height-adjustable in such a way that this part (12) can project beyond the movable object (2).

5. Robot system according to one of the preceding claims, **characterized in that** at least one robot (3) is configured such that it can determine whether the movable object (2), in particular a chassis (4) of the movable object (2), is blocked.

6. Robot system according to one of the preceding claims, **characterized in that** both robots (3) are configured to move the movable object (2) forward, backward and sideward without lifting the movable object (2).

7. Hospital bed (2) comprising a robot system (1) according to any one of claims 1 to 6, wherein both robots (3) of the robot system (1) are coupled to the hospital bed (2).

8. Method for transporting a movable object (2), in particular a hospital bed, with a robot system (1), wherein two robots (3) of the robot system (1) couple to the movable object (2) in such a way that a force from at least one of the robots (3) can be transferred to the movable object (2), so that the robots (3) can jointly transport the movable object (2),
**characterized in that**
both robots (3) are connected to each other before the start of transport and move together as one unit to a pick-up location and separate into both robots (3) at the pick-up location.

9. Method according to claim 8, **characterized in that** one of the robots (3) couples to a front end portion (7) of the movable object (2) and the other robot couples to a rear end portion (8) of the movable object (2) and the robots (3) transport the movable object (2) to a destination by pushing and/or pulling and/or moving sideways without lifting the movable object (2).

10. Method according to claim 8 or 9, **characterized in that** for splitting and/or uncoupling from the movable object (2), both robots (3) each move at least one wheel (6) of a chassis (4) down onto a base (23) for supporting the respective robot (3).

11. Method according to one of the claims 8 to 10, **characterized in that** at least one part (12) of a sensor system of the one robot (3) is adjusted in height in such a way that this part (12) projects beyond the movable object (2) for the acquisition of sensor data.

12. Method according to one of claims 8 to 11, **characterized in that** the one robot (3) determines before the start of transport whether the movable object (2), in particular a chassis (4) of the movable object (2), is blocked.

## Revendications

1. Système de robot (1) pour transporter un objet mobile (2), en particulier un lit d'hôpital, le système de robot (1) comprenant deux robots (3) et les deux robots (3) étant respectivement reliés à l'objet mobile (2), en particulier à un dispositif d'accouplement (9) de l'objet déplaçable (2), de telle sorte qu'une force d'au moins l'un des robots (3) puisse être transmise à l'objet déplaçable (2), de sorte que les robots (3) puissent transporter ensemble l'objet déplaçable (2),
**caractérisé en ce que**
les deux robots (3) peuvent être reliés l'un à l'autre et peuvent ensuite être déplacés ensemble en tant qu'unité et l'unité peut à nouveau être divisée en deux robots (3), de sorte que les deux robots (3) peuvent être déplacés dans des directions respectivement différentes.

2. Système de robot selon la revendication 1, **caractérisé en ce que** les deux robots (3) présentent chacun un châssis (4) avec au moins une roue entraînée (5) et **en ce que** la roue entraînée (5) peut être pressée sur un sol (23) au moyen d'un dispositif de positionnement (22).

3. Système de robot selon la revendication 2, **caractérisé en ce que** le châssis (4) présente au moins une autre roue (6) pouvant descendre sur un sol (23) et s'éloigner du sol (23).

4. Système robotique selon l'une des revendications précédentes, **caractérisé en ce qu'**au moins un robot (3) comporte un système de détection et **en ce qu'**au moins une partie (12) du système de détection (1) est réglable en hauteur de telle sorte que cette partie (12) peut dépasser de l'objet mobile (2).

5. Système robotique selon l'une des revendications précédentes, **caractérisé en ce qu'**au moins un robot (3) est agencé de manière à pouvoir déterminer si l'objet mobile (2), en particulier un train de roulement (4) de l'objet mobile (2), est bloqué.

6. Système robotique selon l'une des revendications précédentes, **caractérisé en ce que** les deux robots (3) sont agencés pour déplacer l'objet mobile (2) vers l'avant, vers l'arrière et latéralement sans soulever l'objet mobile (2).

7. Lit d'hôpital (2) comprenant un système robotique (1) selon l'une quelconque des revendications 1 à 6, dans lequel les deux robots (3) du système robotique (1) sont couplés au lit d'hôpital (2).

8. Procédé de transport d'un objet mobile (2), en particulier d'un lit d'hôpital, avec un système robotique (1), deux robots (3) du système robotique (1) étant couplés à l'objet mobile (2) de telle sorte qu'une force d'au moins l'un des robots (3) puisse être transmise à l'objet mobile (2), de sorte que les robots (3) puissent transporter ensemble l'objet mobile (2),
**caractérisé en ce que**
les deux robots (3) sont reliés entre eux avant le début du transport et se déplacent ensemble en tant qu'unité vers un lieu d'enlèvement et se divisent en deux robots (3) au lieu d'enlèvement.

9. Procédé selon la revendication 8, **caractérisé en ce que** l'un des robots (3) est couplé à une partie d'extrémité avant (7) de l'objet mobile (2) et l'autre robot est couplé à une partie d'extrémité arrière (8) de l'objet mobile (2), et les robots (3) transportent l'objet mobile (2) vers une destination en le poussant et/ou en le tirant et/ou en le déplaçant latéralement, sans soulever l'objet mobile (2).

10. Procédé selon la revendication 8 ou 9, **caractérisé en ce que** pour diviser et/ou découpler de l'objet déplaçable (2), les deux robots (3) descendent chacun au moins une roue (6) d'un châssis (4) sur un support (23) pour soutenir le robot (3) respectif.

11. Procédé selon l'une des revendications 8 à 10, **caractérisé en ce qu'**au moins une partie (12) d'un système de capteurs de l'un des robots (3) est réglée en hauteur de telle sorte que cette partie (12) dépasse de l'objet (2) déplaçable pour la saisie de données de capteurs.

12. Procédé selon l'une des revendications 8 à 11, **caractérisé en ce que** l'un des robots (3) détermine, avant le début du transport, si l'objet déplaçable (2), en particulier un train de roulement (4) de l'objet déplaçable (2), est bloqué.
